# EUROPÄISCHE PATENTSCHRIFT

(11) **EP 0 992 550 B1**
(45) Veröffentlichungstag und Bekanntmachung des Hinweises auf die Patenterteilung: **21.04.2004**
(21) Anmeldenummer: 99118096.9
(22) Anmeldetag: 27.09.1999
(51) Int. Cl.: C09D 11/00, C09D 11/10, G03C 1/835

(54) **Inkjet-Tinte**
Ink-jet ink
Encre pour l' impression par jet d' encre

(30) Priorität: 08.10.1998 DE 19846433
(43) Veröffentlichungstag der Anmeldung: 12.04.2000
(73) Patentinhaber: AGFA-GEVAERT, 2640 Mortsel (BE)
(72) Erfinder: Helling, Günter, Dr., 51519 Odenthal (DE); Herrmann, Stefan, Dr., 53123 Bonn (DE)

(56) Entgegenhaltungen:
- EP-A- 0 060 438
- EP-A- 0 732 381
- US-A- 3 766 126
- US-A- 4 353 972
- US-A- 5 271 765

## Beschreibung

Die Erfindung betrifft eine Tinte für die Erzeugung von Inkjet-Bildern, die in einem feinen bildmäßig modulierten Strahl auf ein geeignetes Aufzeichnungsmaterial gespritzt wird. Das Auszeichnungsmaterial besteht aus einem transparenten, halbtransparenten oder undurchsichtigen Träger und einer darauf befindlichen Bildempfangsschicht.

Aus EP 60 438 A2 ist eine Farbstoffzubereitung aus einem wasserlöslichen sauren Farbstoff und einem wasserunlöslichen feine Polymerteilchen enthaltenden basischen Träger zur Herstellung gefärbter Gießlösungen für fotografische Produkte bekannt.

Das Inkjet-Verfahren ist bekannt (siehe beispielsweise das Kapitel Ink Jet Printing von R.W. Kenyon in "Chemistry and Technolgy of Printing and Imaging Systems", Herausgeber Peter Gregory, Blackie Acedamic & Professional, Chapman & Hall 1996, Seitten 113 bis 138, und die darin zitierte Literatur).

Ein Problem bei Inkjet-Bildern ist die Stabilität und die Wischfestigkeit.

Es ist aus EP 672 538 bekannt, zur Erzeugung von wasserfesten und wischfesten Inkjet-Drucken reaktive Komponenten den Beschichtungsmassen der Unterlage zuzusetzen. Diese Zusätze bewirken bei einer nachträglichen Bestrahlung des Bildes eine Vernetzung der Beschichtungsmasse und damit eine Verbesserung der Wischfestigkeit des vorher in diese Bindemittel übertragenen Farbstoffs.

Nachteilig an diesem Verfahren ist, daß nach dem Druckvorgang ein weiterer teurer Verfahrensschritt wie Bestrahlung mit UV-Licht erforderlich ist. Weiterhin müssen weitere Zusätze, z.B. Fotoinitiatoren zugegeben werden, die bei Lagerung zur Vergilbung neigen und die Bildweißen unansehnlich erscheinen lassen. Weiterhin wird bei kurzen UV-Bestrahlungszeiten die gewünschte Verbesserung des Verwaschens der Drucke nicht erreicht.

Der Erfindung liegt die Aufgabe zugrunde, eine Tinte für ein Inkjet Druckverfahren bereitzustellen, die auf unterschiedlichen Unterlagen ohne spezielle Präparation ein Druckbild von hohem Glanz und guter Wisch- und Wasserfestigkeit und hoher Lichtund Dunkelstabilität liefert.

Es ist weiterhin bekannt, zur Verbesserung der Wasserfestigkeit oder für dem Wetter ausgesetzte Anwendungen hydrophobe wasserunlösliche Farbstoffe, wie sie z.B. in Research Disclosure (RD) 30 887 (1989) beschrieben werden, einzusetzen. Nachteilig ist, daß diese Farbstoffe zur Herstellung wässriger Tinten dispergiert werden müssen und daß übliche wässrige Dispersionen zu große Teilchen aufweisen und nach dem Druck eine zu breite Absorptionslinie und damit eine schlechte Farbwiedergabe zeigen.

Aus EP 732 381 A1 sind feine Polymerteilchen für Inkjet-Tinten bekannt, die insbesondere aus Polyurethan bestehen und saure, anionische Gruppen wie Carboxylgruppen tragen.

US 5,271,765 beschreibt Inkjet-Tinten, die eine Kombination aus einem kationischen Farbstoff und einem kationischen Polymer enthalten.

Aus DE 28 45 375 ist bekannt, Latices aus Vinylpolymeren mit Farbstoffen zu imprägnieren und für das Inkjet-Verfahren zu verwenden. Nachteilig an diesem Verfahren ist die geringe Kolloidstabilität der imprägnierten Latexteilchen und die Neigung zur Düsenverstopfung.

Eine weitere Aufgabe ist, diese Düsenverstopfung zu vermeiden.

Es wurde nun gefunden, daß Tinten, die wasserunlösliche, vernetzte Polymerteilchen enthalten, die aufgrund ihres Gehaltes an quartären Ammonium- oder Phosphoniumgruppen mit Wasser quellbar und mit wasserlöslichen, anionischen Farbstoffen beladen sind, die genannten Anforderungen erfüllen.

Gegenstand der Erfindung ist somit die Verwendung einer wäßrigen Farbstoffzubereitung enthaltend
a) wenigstens einen wasserlöslichen sauren bzw. anionischen Farbstoff, und
b) wenigstens einen wasserunlöslichen basischen bzw. kationischen Träger für den sauren Farbstoff
in Inkjet-Tinten, dadurch gekennzeichnet, daß der basische Träger aus vernetzten Polymerteilchen mit einem Teilchendurchmesser von kleiner als 1 µm und einem Gehalt an quaternären Ammonium- oder Phosphoniumgruppen von mindestens 2 mVal/g besteht.

Die quaternären Gruppen entsprechen vorzugsweise der Formel I 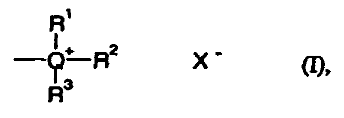 worin
- Q: ein Stickstoff- oder Phosphoratom;
- R¹, R² und R³: jeweils einen carbocyclischen Rest oder einen Alkylrest und
- X⁻: ein Anion bedeuten, wobei R¹, R² und R³ die gleiche oder eine voneinander verschiedene Bedeutung haben können, oder zwei der genannten Reste zusammen einen 5- oder 6-gliedrigen heterocyclischen Ring, vervollständigen.

Alkylreste, die in Formel I durch R¹, R² und R³ dargestellt werden, sind geradkettig oder verzweigt und weisen vorzugsweise 1 bis 12 Kohlenstoffatome auf. Beispiele hierfür sind etwa Methyl, Ethyl, Propyl, Isobutyl, Pentyl, Hexyl, Heptyl, Dodecyl.

Haben in Formel I R¹, R² und R³ die Bedeutung von carbocyclischen Resten, so handelt es sich dabei um gegebenenfalls substituierte Cycloalkyl-, Aralkyl- oder Arylreste mit vorzugsweise 5 bis 12 Kohlenstoffatomen, z.B. Cyclopentyl, Cyclohexyl, Benzyl, p-Methylbenzyl, Chlorbenzyl, Nitrobenzyl, Cyanobenzyl, Methoxybenzyl, Methoxycarbonylbenzyl, Ethylthiobenzyl, Phenyl, Tolyl.

Beispiele für 5- oder 6-gliedrige heterocyclische durch zwei der Reste R¹, R² und R³ vervollständigte Ringe sind der Pyrrolidin-, der Piperidin- und der Morpholinring.

Als bevorzugtes Trägerpolymer kommen insbesondere solche Polymere in Frage, die durch eine der üblichen Additionspolymerisationstechniken, z.B. durch Emulsionspolymerisation, aus einem Monomergemisch erhalten werden können, das sowohl solche additionspolymerisierbare Monomere (A) enthält, die bereits eine quaternäre Ammoniumgruppe enthalten oder leicht quaternierbar sind, als auch solche Monomere (B), die mindestens zwei additionspolymerisierbare Gruppierungen enthalten und aufgrund ihrer Anwesenheit durch polymerisierenden Einbau in verschiedene (ursprünglich getrennte) Polymerketten vernetzend wirken. Die Quaternierung bzw. Einführung von quaternären Gruppen kann auch im Anschluß an die Polymerisation vorgenommen werden, z.B. dadurch, daß in dem Polymer enthaltene tertiäre Aminogruppen mit einem alkylierenden Quaternierungsmittel behandelt werden oder dadurch, daß in dem Polymer enthaltene Gruppen mit aktiven Halogenatomen mit tertiären Aminen oder Phosphinen umgesetzt werden. Neben den für die Anwesenheit der quaternären Gruppen wichtigen Monomeren und denjenigen, die die Vernetzung bewirken, kann das Monomerengemisch weitere modifizierende Monomere (M) enthalten.

Geeignete Trägerpolymere weisen demnach beispielsweise folgende Struktur auf

(-A-)ₓ (-M-)_{y} (-B-)_{z} (II),

worin
- A: den Rest eines polymerisierten Monomeren mit mindestens einem polymerisierbaren ethylenisch ungesättigten Rest und mindestens einer quatemären Gruppe;
- B: den Rest eines polymerisierten Monomeren mit mindestens zwei polymerisierbaren ethylenisch ungesättigten Resten, z.B. Vinylresten;
- M: den Rest eines polymerisierten Monomeren mit einem polymerisierbaren ethylenisch ungesättigten Rest;
- x, y, z: die den Anteil der einzelnen Comonomeren am Polymer kennzeichnenden Zahlwerte und zwar derart, daß
- x: 10 bis 99 Mol-%,
- y: 0 bis 90 Mol-%,
- z: 0 bis 10 Mol-% bedeuten.

Geeignete Monomere zur Erzeugung der Einheiten A sind solche, die eine polymerisierbare ethylenisch ungesättigte Doppelbindung und über ein Bindeglied hiermit verknüpft eine quaternäre oder quaternierbare Gruppe enthalten. Als quaternierbar wird in diesem Zusammenhang eine Gruppe bezeichnet, die durch eine Alkylierungsreaktion in eine quaternäre Gruppe umgewandelt werden kann. Beispiele für solche quaternierbaren Gruppen sind etwa eine an eine Phenylgruppe gebundene Halogenmethylgruppe oder eine an eine Phenylgruppe gebundene tert.-Aminomethylgruppe. Im ersteren Fall wird die Quaternierung mit tertiären Aminen oder Phosphinen, im letzteren Fall mit üblichen Quaternierungsmitteln (Alkylierungsmitteln) durchgeführt. Der Ausdruck "Alkylierung" bezieht sich im vorliegenden Zusammenhang auf eine Reaktion, bei der beispielsweise zwischen dem Stickstoffatom eines tertiären Amins und einem Kohlenstoffatom einer Alkylgruppe (einschließlich substituierter Alkylgruppen) eine Bindung hergestellt wird.

Besonders vorteilhafte Polymere zur Herstellung der erfindungsgemäßen Farbstoffzubereitungen sind solche der Formel II, wobei B der Rest eines durch Additionspolymerisation polymerisierbaren Monomeren mit mindestens zwei ethylenisch ungesättigten Resten ist, das der folgenden Formel III entspricht, 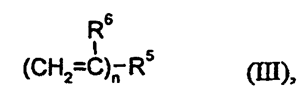 worin
- n: eine ganze Zahl größer als 1, vorzugsweise 2, 3 oder 4,
- R⁵: einen n-bindigen organischen Rest und
- R⁶: ein Wasserstoffatom oder einen Methylrest bedeuten.
- R⁵: kann beispielsweise einen 2- oder mehrbindigen organischen Rest bedeuten, der aus Alkylen-, Arylen-, Aralkylen-, Cycloalkylengruppen (bzw. bei mehrbindigen organischen Resten aus den entsprechenden mehrbindigen Analoga der genannten Gruppen), weiter Ester-, Sulfonylester-, Amid-, Sulfonamidgruppen, Ethersauerstoff- oder Thioetherschwefelatomen oder Kombinationen der erwähnten Gruppen und Atome aufgebaut ist. R⁵ kann beispielsweise eine Methylen-, Ethylen-, Trimethylen-, Phenylen-, Phenylendioxycarbonyl-, 4,4'-Isopropylidenbisphenylenoxycarbonyl-, Methylenoxycarbonyl-, Ethylen-dioxycarbonyl-, 1,2,3-Propan-tri-yl-tris-(oxycarbonyl)-, Cyclohexylen-bis(methylen-oxycarbonyl)-, Ethylenbis(oxyethylenoxycarbonyl)-, Ethylidintrioxycarbonylgruppe bedeuten.

Vorzugsweise werden dabei solche Monomeren ausgewählt, die in Gegenwart von starkem Alkali stabil und nicht besonders reaktiv sind, so daß keine Hydrolyse während der Copolymerisation erfolgt.

### Beispiele für Monomere, aus denen die Einheiten B gebildet sein können, sind:

Divinylbenzol; Allylacrylat; Allylmethacrylat; N-Allylmethacrylamid; 4,4'-Isopropylidendiphenyldiacrylat; 1,3-Butylendiacrylat; 1,3-Butylendimethacrylat; 1,4-Cyclohexylendimethylendimethacrylat; Di-ethylenglykoldimethacrylat; Diisopropylenglykoldimethacrylat; Ethylendiacrylat; Ethylendimethacrylat; Ethylidendiacrylat; 1,6-Diacrylamidohexan; 1,6-Hexamethylendiacrylat; 1,6-Hexamethyleadimethacrylat; N,N'-Methylenbisaerylamid; Neopentylglykoldimethacrylat; Tetraethylenglykoldimethacrylat; Tetramethylendiacrylat; Tetramethylendimethacrylat; 2,2,2-Trichlorethylidendimethacrylat; Triethylenglykoldiacrylat; Triethylenglykoldimethacrylat; Ethylidyntrimethacrylat; 1,2,3-Propantriyltriacrylat; Vinylmethacrylat; 1,2,4-Trivinylcyclohexan, Tetraallyloxyethan.

Besonders vorteilhafte Monomere für die Erzeugung von Einheiten B sind Trivinylcyclohexan, Divinylbenzol, Tetraallyloxyethan, 1,4-Butylendimethacrylat. Auch können nebeneinander zwei oder mehrere der genannten Monomeren für die Erzeugung von Einheiten B der erfndungsgemäßen Polymeren verwendet werden.

Zur Erzeugung der Einheiten M können die verschiedensten mit den übrigen Monomeren copolymerisierbaren monoethylenisch ungesättigten Monomeren verwendet werden. Auch können hier Monomere mit konjugierten ethylenisch ungesättigten Bindungen verwendet werden. Diese Monomere bzw. die aus ihnen erzeugten polymerisierten Einheiten M enthalten jedoch keine quaternären Gruppen.

### Typische geeignete Monomere für die Erzeugung der Einheiten M sind:

Ethylen; Propylen; 1-Buten; 4-Methylpenten-1; Styrol, α-Methylstyrol; monoethylenisch ungesättigte Ester von aliphatischen Säuren, z.B. Vinylacetat, Isopropenylacetat, Allylacetat und dergleichen; Ester von ethylenisch ungesättigten Mono- und Dicarbonsäuren, z.B. Methylmethacrylat, Ethylacrylat, Glycidylacrylat, Glycidylmethacrylat, Butylacrylat, ferner sonstige monoethylenisch ungesättigte Verbindungen wie beispielsweise Acrylnitril, Allylcyanid sowie ferner bestimmte konjugierte Diene, z.B. Butadien, Isopren und 2,3-Dimethylbutadien.

Vorzugsweise liegen die Einheiten B zu 1,0 bis 5,0 Mol-% vor, die Einheiten M zu 0 bis 45 Mol-% und die Einheiten A zu 40 bis 99 Mol-%.

Die erfindungsgemäß verwendeten Trägerpolymeren lassen sich nach üblichen Emulsions-Polymerisationsverfahren herstellen, beispielsweise durch Emulsionspolymerisation eines mono-ethylenisch ungesättigten, quaternäre oder quaternierbare Gruppen enthaltenden Monomers (A) mit einem mehrfach ungesättigten Monomer (B) und einem mono-ethylenisch ungesättigten Monomer (M) zweckmäßig in Gegenwart einer anionischen oberflächenaktiven Verbindung beispielsweise Natriumlaurylsulfat oder in Gegenwart des Natriumsalzes eines sulfonierten Alkylphenol-Ethylenoxidkondensates sowie zweckmäßig in Gegenwart eines Radikalbildners oder Radikalinitiators, beispielsweise in Gegenwart eines freie Radikale bildenden Initiators vom Redoxtyp z.B. in Gegenwart von Kaliumpersulfat-Natriumbisulfit; Kaliumpersulfat-Fe²⁺; H₂O₂⁻Fe²⁺. Beispielsweise können Verfahren angewandt werden, wie sie in der US-PS 3 072 588 beschrieben werden.

Falls das Monomer A anstelle einer quaternären Gruppe eine funktionelle Gruppe enthält, die mit einem tertiären Amin oder Phosphin unter Ausbildung einer quaternären Gruppe reagieren kann, wird der bei der Polymerisation anfallende Latex mit einem tertiären Amin oder tertiären Phosphin der folgenden Formel IV 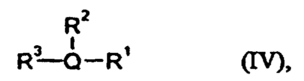 worin
R¹, R², R³ und Q die angegebene Bedeutung haben,
umgesetzt, zweckmäßig bei Temperaturen von -20°C bis 150°C. Dabei wird ein polymerer Microgel-Latex erhalten.

Die erfindungsgemäß verwendeten Trägerpolymere fallen in der Regel in Form eines Latex an, aus dem sie nach Bedarf in fester Form isoliert werden können. Sie lassen sich leicht in Wasser redispergieren und weisen einen Teilchendurchmesser von kleiner als 1 µm, vorzugsweise von 50 bis 200 nm auf. Geeignete Trägerpolymere sind in DE-OS 2 551 790, 2 846 044 und 29 41 819 beschrieben. Bevorzugt weist das Strukturelement A eine Struktur der folgenden Formel V auf 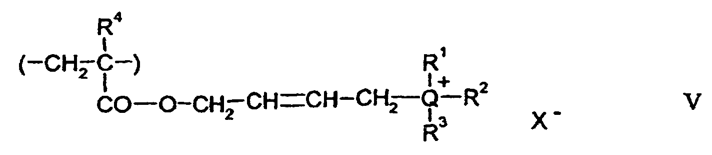 worin
- R¹, R², R³ und X⁻: die bereits angegebene Bedeutung haben und R⁴ Wasserstoff oder Alkyl, vorzugsweise Methyl, bedeutet

Beispiele für geeignete Trägerpolymere gemäß der Erfindung sind im folgenden aufgeführt:

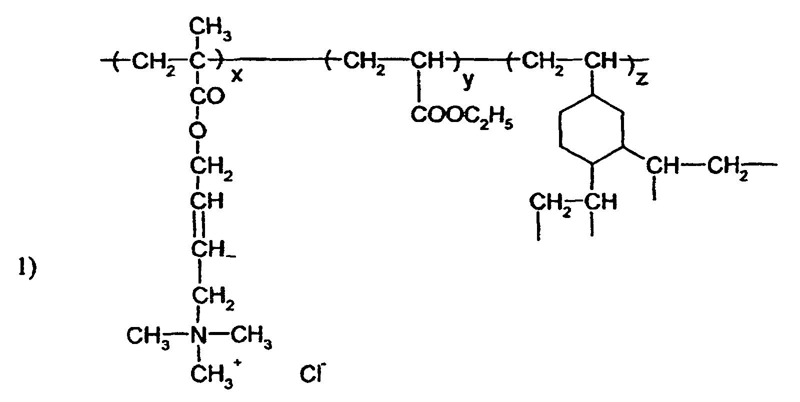

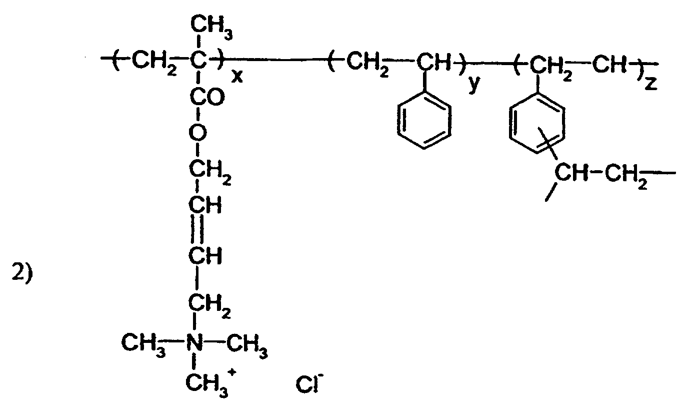

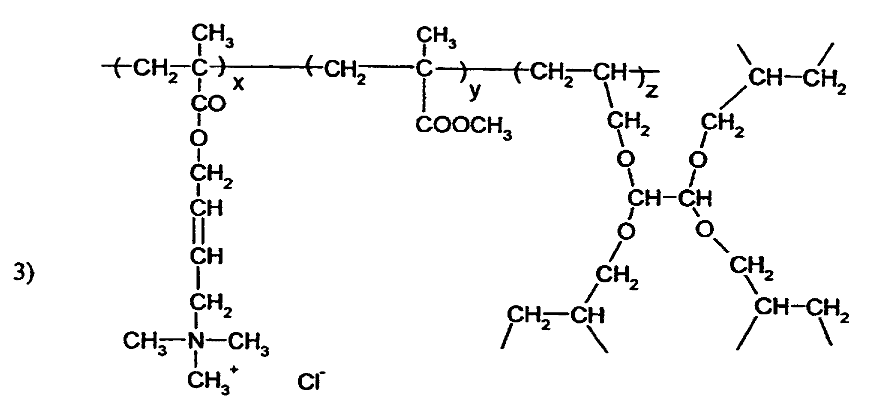

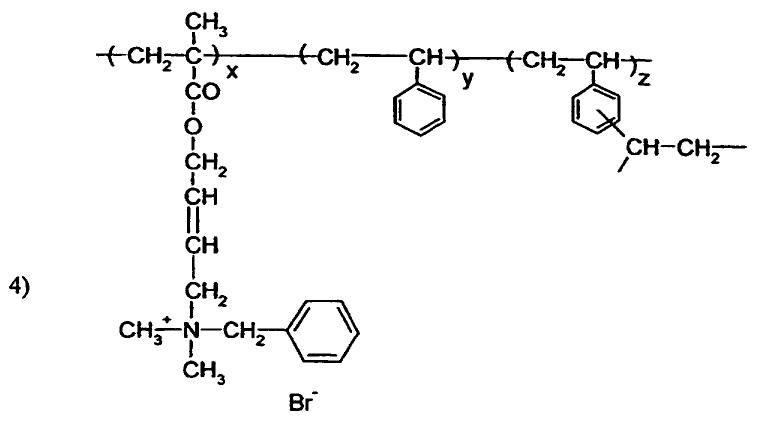

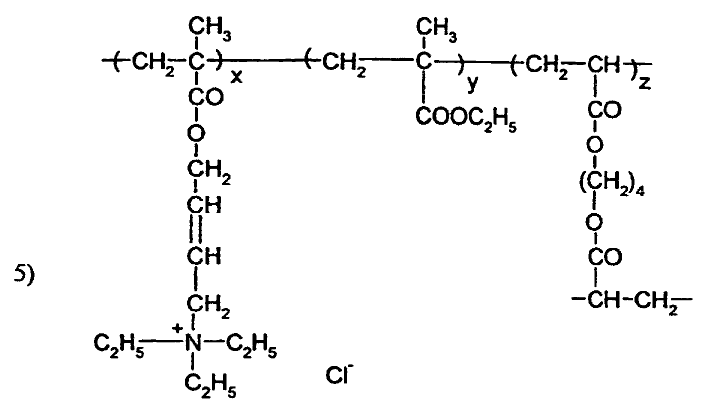

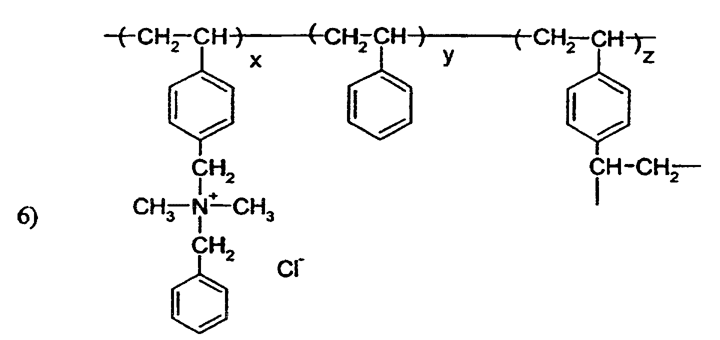

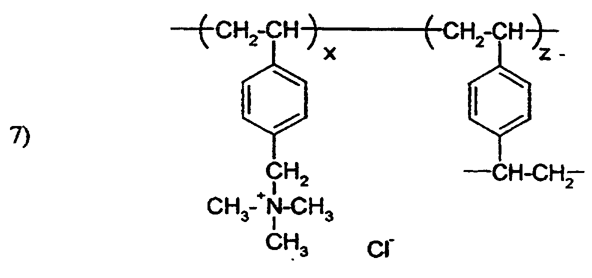

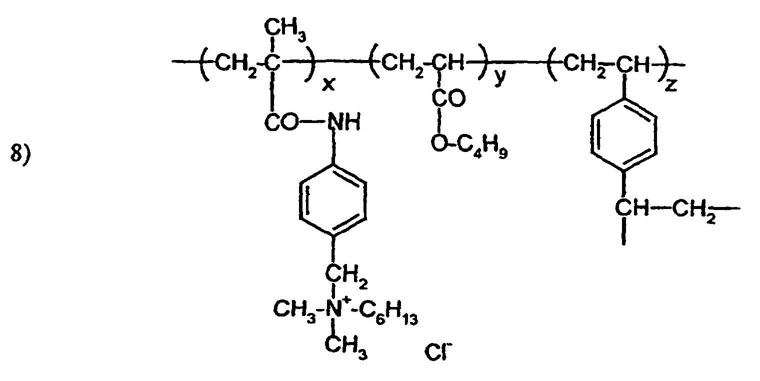

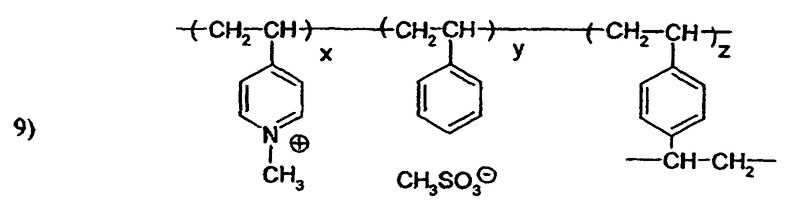

Die Anteile der Monomeren in den Trägerpolymeren 1 bis 9 sind in folgender Tabelle in mol-% dargestellt:

**Tabelle**

| **Polymer** | **x** | **y** | **z** |
|---|---|---|---|
| 1 | 50 | 47 | 3 |
| 2 | 48 | 48 | 4 |
| 3 | 65 | 30 | 5 |
| 4 | 90 | 7 | 3 |
| 5 | 60 | 35 | 5 |
| 6 | 75 | 20 | 5 |
| 7 | 96 | - | 4 |
| 8 | 48 | 48 | 4 |
| 9 | 80 | 15 | 5 |

Als weiteren wesentlichen Bestandteil enthält die erfindungsgemäße Tinte mindestens einen sauren bzw. anionischen Farbstoff. Hierfür kommen im wesentlichen solche Farbstoffe in Frage, die saure anionische Gruppen wie -COOH, -SO₃H und -PO₃H₂ enthalten.

Besonders geeignet sind z.B.
- als Gelbfarbstoffe folgende, aus dem Colour Index, 3rd Ed. sowie amendments, im folgenden abgekürzt C.I., bekannte Farbstoffe: Acid Yellow 23, Direct Yellow 86, 132, 173; Reactive Yellow 37
- als Purpurfarstoffe folgende, aus dem C.I. bekannte Farbstoffe: Acid Red 52, 92; Direct Red 227; Reactive Red 23, 159, 187 sowie 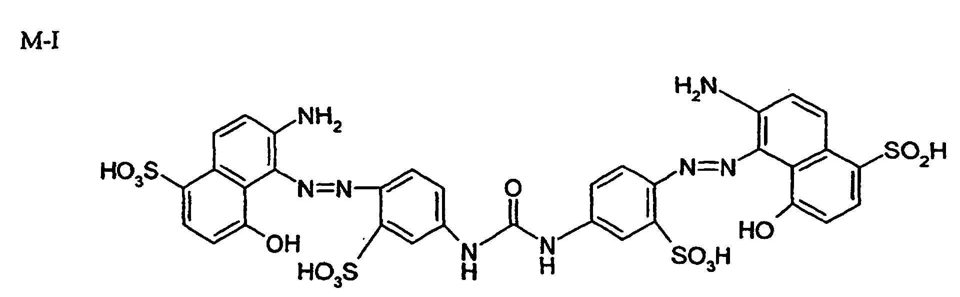
- als Blaugrünfarbstoffe folgende, aus dem C.I. bekannte Farbstoffe: Acid Blue 9, Direct Blue 199,307
- als Schwarzfarbstoffe folgende, im C.I. genannte Farbstoffe: Food Black 2; Direct Black 19, 154, 171, 195; Reactive Black 31, 5, Acid Black 107.

Bei den C.I.-Farbstoffen handelt es sich um Azo-, Triphenylmethan- und Phthalocyaninfarbstoffe.

Bevorzugt sind weiterhin Azomethinfarbstoffe und Indophenolfarbstoffe:

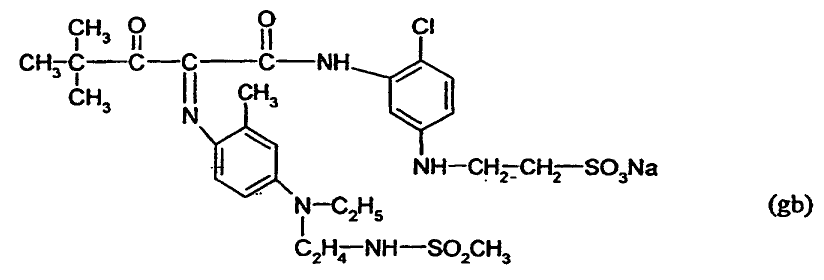

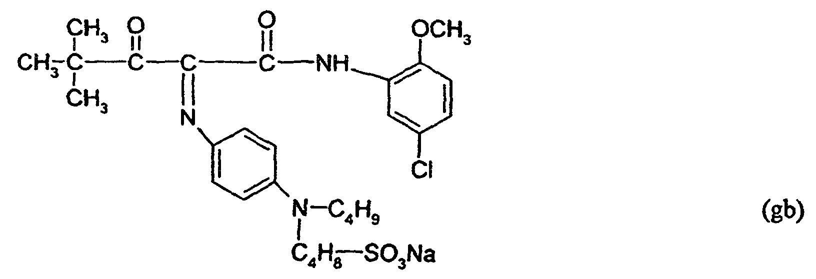

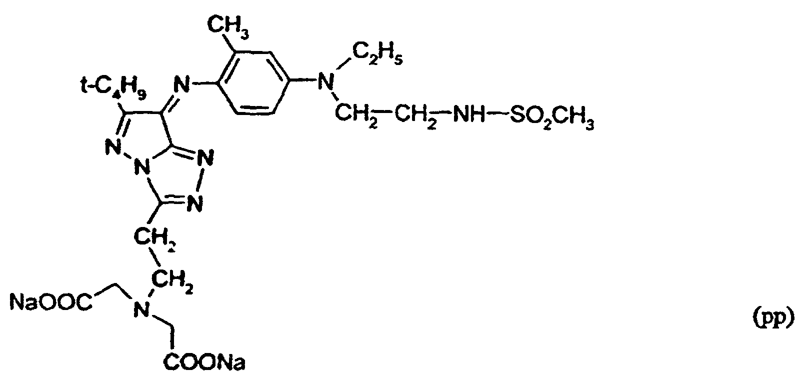

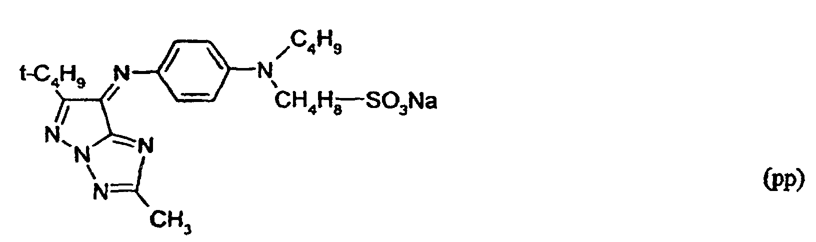

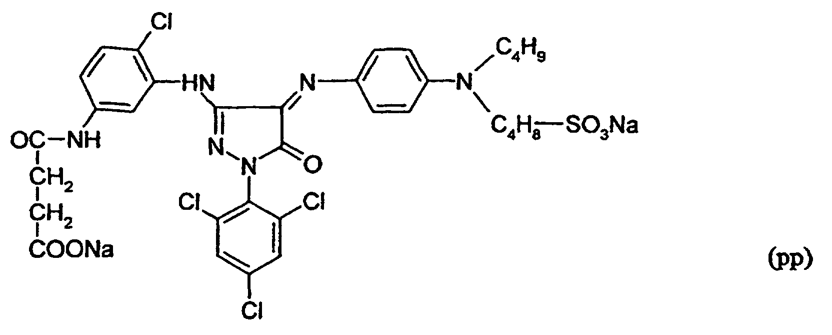

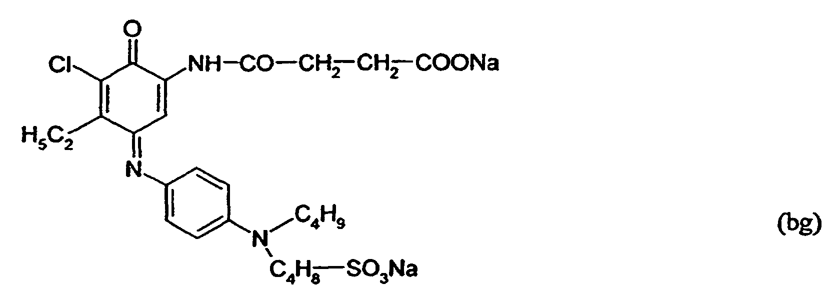

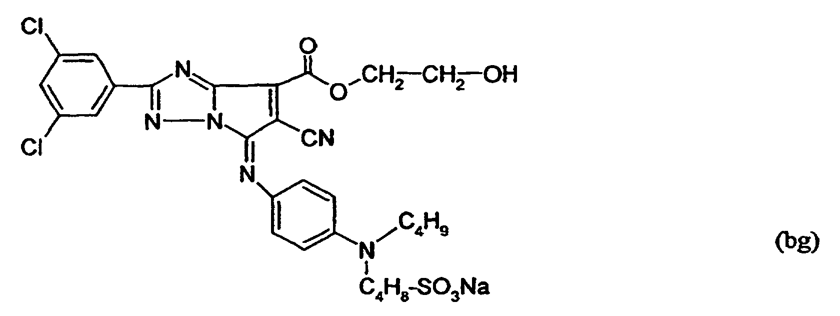

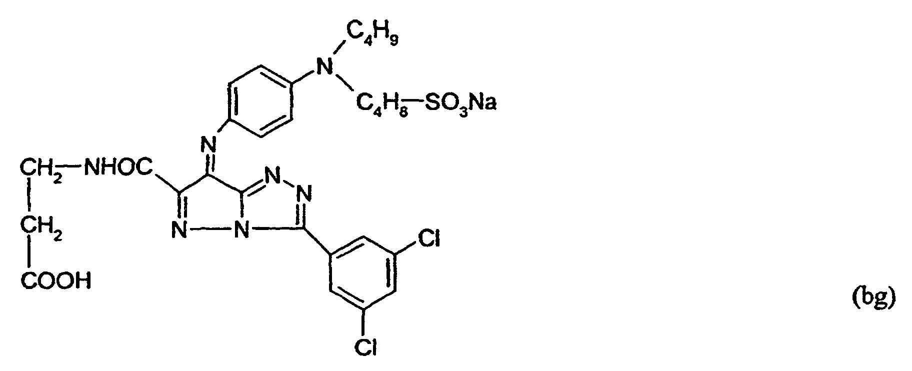

Dabei bedeuten gb Gelb, pp Purpur und bg Blaugrün.

Zweckmäßigerweise enthalten die Tinten Farbstoffstabilisatoren, insbesondere anionische Stabilisatoren, z.B. Verbindungen aus der Reihe der Hydrochinone und Benzcatechine.

### Beispiele sind

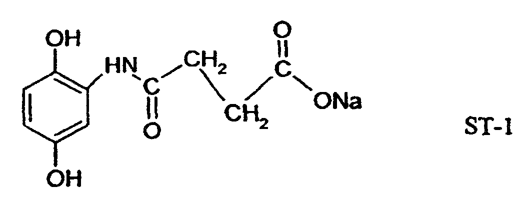

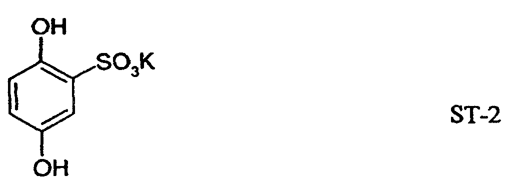

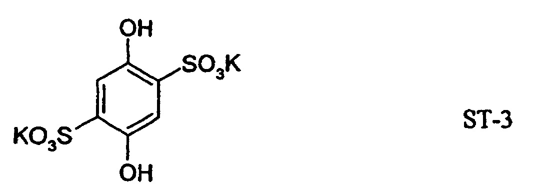

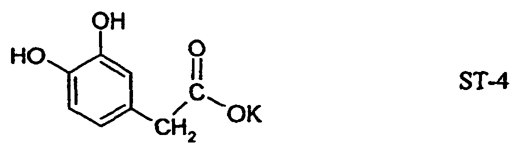

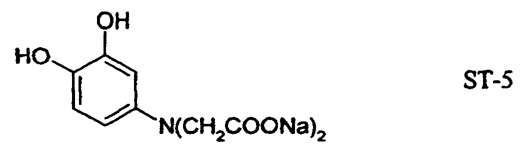

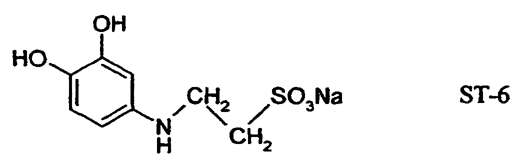

Die Tinte kann außerdem mit Wasser mischbare Lösungsmittel enthalten.

Bevorzugte mit Wasser mischbare Lösungsmittel sind dabei Alkohole und deren Ether oder Ester, Carbonsäureamide, Harnstoffe, Sulfoxide und Sulfone, insbesondere solche mit Molekulargewichten <200. Besonders geeignete Lösungsmittel sind beispielsweise: Methanol, Ethanol, Propanol; Ethylen-, Propylen-, Diethylen-, Thiodiethylen- und Dipropylen-glykol; Butandiol; β-Hydroxypropionitril, Pentamethylenglykol, Ethylenglykolmonoethyl- und -propylether, Ethylendiglykolmonoethylether, Triethylenglykolmonobutylether, Butylpolyglykol, Formamid, Triethylenglykol, 1,5-Pentandiol, 1,3,6-Hexantriol, Essigsäure-2-hydroxyethylester, Essigsäure-2(2'-hydroxy)ethylester, Glycerin, Glykolacetat, 1,2-Dihydroxypropan, 1-Methoxy-2-propanol, 2-Methoxy-1-propanol, N,N-Dimethylfomamid, Pyrrolidon, N-Methyl-caprolactam, ε-Caprolactam, N-Methyl-caprolactam, Butyrolacton, Harnstoff, Tetramethylharnstoff, 1,3-Dimethyl-2-imidazolidinon, N,N'-Dimethylolpropylenharnstoff, Dimethylsulfoxid; Dimethylsulfon, Sulfolan, Isopropanol, Polyethylenglykol.

Die Tinte kann außerdem Zusätze von Polymeren enthalten. Bevorzugt werden Polymerdispersionen wie Polyacrylate, Polymethacrylate, Polystyrole, Polyacrylnitrile, Polyvinylidenchloride, Polycarbonate, Polyurethane verwendet. Ebenso sind Copolymerdispersionen geeignet. Die Polymerdispersionen sind vorzugsweise nichtionisch oder kationisch stabilisiert.

Der Anteil an Polymerdispersionszusätzen beträgt 5 bis 1 000 % bezogen auf die Farbstoffdispersion, vorzugsweise 10 bis 200 %. Als weitere in Drucktinten übliche Zusätze kommen ionische oder nichtionische Stoffe in Frage, mit denen die Viskosität und/oder Oberflächenspannung in die für die Anwendung erforderlichen Bereiche eingestellt werden kann, wie anionische, kationische oder neutrale Tenside, wie Dispergiermittel und Viskositätsregulatoren. Die Funktion von Viskositätsregulatoren kann beispielsweise von den organischen Lösungsmitteln übernommen werden.

Zu Herstellung der erfindungsgemäßen Farbstoffzubereitung werden die genannten Trägerpolymere in wäßriger Dispersion mit einer wäßrigen Lösung des sauren Farbstoffes verrührt. Der Farbstoff wird durch eine Ionenaustauschreaktion an das Polymerteilchen gebunden, was meist mit einem leichten Anstieg des mittleren Teilchendurchmessers einhergeht. Aus der so entstehenden Polymer-Farbstoff-Dispersion kann die erfindungsgemäße Farbstoffzubereitung leicht nach bekannten Aufarbeitungsverfahren in fester, unbegrenzt lagerfähiger Form isoliert werden, z.B. in Form eines Pulvers, das durch Verrühren mit Wasser jederzeit wieder in eine wäßrige Dispersion überführt werden kann. Vorzugsweise enthält die Tinte 1 bis 25 Gew.-%, insbesondere 5 bis 15 Gew.-% Träger b) und 0,1 bis 20 Gew.-%, insbesondere 0,1 bis 5 Gew.-%, Farbstoff a).

### Farbstoffzubereitung 1

53,8 g Poly-(N,N,N-trimethyl-N-4-methacryloyl-butenylammoniumchlorid-co-Styrol-co-Divinylbenzol) 49/49/2 Mol-% (Polymer 2) werden als 12,7 gew.-%ige wässrige Dispersion mit einer Lösung aus 1,0 g Farbstoff F-1 in 50 ml Wasser vermischt. Die entstanden Farbstoff-Polymer-Dispersion wird durch Zugabe von 500 ml Aceton ausgefällt, abfiltriert und getrocknet. Anschließend wird der gelbe Rückstand in 50 ml Wasser durch Rühren redispergiert und auf einen Feststoffgehalt von 10 Gew.-% eingestellt. Die Teilchengröße der Farbstoff-Polymerdispersion wurde mit Hilfe der Laserkorrelationsspektroskopie bestimmt und beträgt 110 nm.

Wie in Farbstoffzubereitung 1 beschrieben, wurden weitere Farbstoffzubereitungen hergestellt. Die Daten sind in Tabelle 1 aufgelistet.

Bei der Farbstoffzubereitung 4 wurden die 3 Farbstoffe so zusammengemischt, daß eine schwarze Farbstoffzubereitung entsteht.

Bei den Farbstoffzubereitungen 5 und 6 wurden 30 Mol-% des Farbstoffs durch einen Stabilisator ersetzt.

**Tabelle 1**

| **Farbstoffzubereitung** | **Polymer Nr.** | **Farbstoff** | **Mittlere Teilchen-Größe** | **Feststoffgehalt (Gew.-%)** |
|---|---|---|---|---|
| 1 | 2 | F-1 | 110 nm | 10 |
| 2 | 6 | F-2 | 140 nm | 12 |
| 3 | 6 | F-3 | 95 nm | 10 |
| 4 | 8 | F-1, F-2, F-3 | 160 nm | 10 |
| 5 | 8 | F-3, Stabilisator 1 | 120 nm | 12 |
| 6 | 6 | F-3, Stabilisator 2 | 110 nm | 9 |
| F-1 ist Acid Yellow 23; F-2 ist Acid Blue 9; F-3 ist Acid Red 52. | | | | |

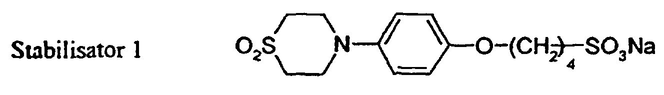

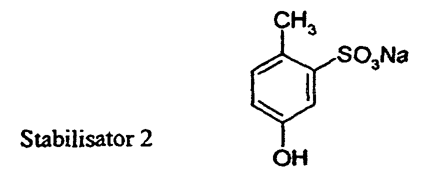

### Beispiele

### Beispiel 1

Zu 105 ml der Farbstoffzubereitung 1 gibt man eine Lösung, die aus 21,1 ml Polyethylenglycol 300, 10,14 ml 2-Pyrrolidon und 110 ml entmineralisiertem Wasser zubereitet wurde. Man rührt 15 min und filtriert nacheinander durch ein Papierfilter und ein Mikrofilter (Porenweite 0,45 µm). Man erhält eine gebrauchsfertige, gelbe Tinte.

### Beispiel 2

Zu 79,2 ml der Farbstoffzubereitung 2 gibt man eine Lösung, die aus 21,75 ml Polyethylenglycol 300, 11,0 ml 2-Pyrrolidon und 134,1 ml entmineralisiertem Wasser zubereitet wurde. Man rührt 15 min und filtriert nacheinander durch ein Papierfilter und ein Mikrofilter (Porenweite 0,45 µm). Man erhält eine gebrauchsfertige, blaue Tinte.

### Beispiel 3

Zu 127,5 ml der Farbstoffzubereitung 4 gibt man eine Lösung, die aus 25,55 ml Polyethylenglycol 300, 10,14 ml 2-Pyrrolidon, 1,6 ml 2-Propanol und 81,25 ml entmineralisiertem Wasser zubereitet wurde. Man rührt 20 min und filtriert nacheinander durch ein Papierfilter und ein Mikrofilter (Porenweite 0,45 µm). Man erhält eine gebrauchsfertige, schwarze Tinte.

### Beispiel 4

Zu 141,7 ml der Farbstoffzubereitung 6 gibt man eine Lösung, die aus 19,98 ml Polyethylenglycol 300 und 10,8 ml 2-Pyrrolidon in 77,5 ml entmineralisiertem Wasser zubereitet wurde. Man rührt 15 min und filtriert nacheinander durch ein Papierfilter und ein Mikrofilter (Porenweite 0,45 µm). Man erhält eine gebrauchsfertige, rote Tinte.

### Prüfungen:

Die Tinten werden jeweils in eine Patrone eines Epson Stylus Color 800 Inkjet-Druckers gefüllt. Es wird mit einer Auflösung von 720 dpi auf Normalpapier 80 g/m² gedruckt. Das Testbild enthält jeweils 10 bis 50 mm² große Farbfelder in 10, 25, 50 und 100 %iger Farbdichte. Als Vergleich wurde ein 50 %-Graufeld mit den Epson-Tinten gedruckt.

### Wasserfestigkeit:

Diese wird durch Eintauchen des 15 min getrocknetem Testbildes für eine Zeit von 0,2, 1, 5, 10 bzw. 60 min in entmineralisiertes Wasser von 25°C und anschließendes Bewerten des Farbverlaufs bestimmt.

Bemerkungen:
- +: kein sichtbares Verlaufen
- 0: leichte Farbsäume um die gedruckten Farbfelder
- -: starkes Verlaufen der Farben.

| Zeit | Beispiel 1 | Beispiel 2 | Beispiel 3 | Beispiel 4 | Vergleich |
|---|---|---|---|---|---|
| 0,2 | + | + | + | + | 0 |
| 1 | + | + | + | + | 0 |
| 5 | + | + | + | + | - |
| 10 | + | + | + | + | - |
| 60 | + | + | 0 | + | - |

Wie man sieht, verändern sich die getrockneten Ausrucke unter Wassereinfluß nicht mehr.

Außerdem wurde die Beständigkeit in feuchtem Klima geprüft. Dazu werden die Testbilder für 5 Tage bei 40°C, 95 % rel. Feuchte gelagert. Während die Kontrolle starke Farbsäume an allen Farbflächen aufweist, tritt an den Druckproben der Beispiele 1 bis 4 keine Veränderung auf.

### Lichtechtheit

Die Testbilder werden mit 14,4 mio luxh in 10/10 sec hell/dunkel-Rhytmus belichtet. Danach wird der Dichteverlust ΔD(in %) der Felder mit 100 % Ausgangsdichte gemessen.

| Beispiel | 1 | 2 | 3 | 4 | Vergleich |
|---|---|---|---|---|---|
| ΔD (%) | 13 | 14 | 9 | 4 | 28 |

### Ausbluten:

Um das Ausbluten der Farben ineinander zu beurteilen, werden jeweils die Schwarzund Rotpatrone des Druckers mit verschiedenen Beispieltinten gefüllt. Danach wird ein Testbild gedruckt, bei dem eine Farbfläche der ersten Tinte von breiten Linien der zweiten Tinte in 0°, 45° und 90°-Winkel durchlaufen wird. Das Ineinanderbluten wird von 1 (scharfe Kante, kein Ausbluten) bis 5 (keine scharfe Farbgrenze) benotet.

| | Bsp. (Linien) (zweite Tinte) | 1 | 2 | 3 | 4 |
|---|---|---|---|---|---|
| Bsp. (Fläche) (erste Tinte) | 1 | - | 2 | 1 | 2 |
| | 2 | | - | 1 | 1 |
| | 3 | | | - | 1 |
| | 4 | | | | - |

### Beispiel 5

Die Farbstoffzubereitung 1 wird mit 20 ml Wasser verdünnt und gerührt. Die enthaltene Lösung wird nach Filtration (wie oben) mit einem Kaskadengießer mit einer Naßschichtdicke von 50 µm auf einen 160 g/m² starken Karton gegossen. Nach der Trocknung erhält man einen gelben, einseitig wasserfesten Karton. Wasseraufnahme: unbeschichtet: 36 g/m², beschichtet: 1,7 g/m².

### Beispiel 6

Wie Beispiel 5, nur daß auf eine 10 µm starke Polyesterfolie gegossen wird.

Die Materialien der Beispiele 5 und 6 werden für 6 h in entmineralisiertes Wasser von 40°C gelegt. In beiden Fällen treten keine Schichtablösung oder Farbveränderungen auf.

Die Materialien lassen sich z.B. zu Verpackungszwecken nutzen.

## Patentansprüche

1. Verwendung von
a) wenigstens einem wasserlöslichen sauren bzw. anionischen Farbstoff und
b) wenigstens einem wasserunlöslichen basischen bzw. kationischen Träger für den sauren Farbstoff
in Inkjet-Tinten, **dadurch gekennzeichnet, dass** der basische Träger aus vernetzten Polymerteilchen mit einem Teilchendurchmesser von kleiner als 1 µm und einem Gehalt an kovalent gebundenen quaternären Ammonium- oder Phosphoniumgruppen von mindestens 2 mVal/g besteht.

2. Verwendung der Zusammensetzung aus a) und b) nach Anspruch 1 in Inkjet-Tinten, **dadurch gekennzeichnet, dass** die quaternären Gruppen der Formel I 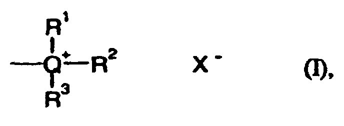 entsprechen, worin
Q ein Stickstoff- oder Phosphoratom;
R¹, R² und R³ jeweils einen carbocyclischen Rest oder einen Alkylrest und
X⁻ ein Anion bedeuten, wobei R¹, R² und R³ die gleiche oder eine voneinander verschiedene Bedeutung haben können, oder zwei der genannten Reste zusammen einen 5- oder 6-gliedrigen heterocyclischen Ring, vervollständigen.

3. Verwendung der Zusammensetzung aus a) und b) nach Anspruch 1 in Inkjet-Tinten, **dadurch gekennzeichnet, dass** das Polymer der vernetzten Polymerteilchen der Formel
(-A-)ₓ (-M-)_{y} (-B-)_{z} (II),
entspricht, worin
A den Rest eines polymerisierten Monomeren mit mindestens einem polymerisierbaren ethylenisch ungesättigten Rest und mindestens einer quaternären Gruppe;
B den Rest eines polymerisierten Monomeren mit mindestens zwei polymensierbaren ethylenisch ungesättigten Resten;
M den Rest eines polymerisierten Monomeren mit einem polymerisierbaren ethylenisch ungesättigten Rest;
x, y, z die den Anteil der einzelnen Comonomeren am Polymer kennzeichnenden Zahlwerte und zwar derart, dass
x 10 bis 99 Mol-%,
y 0 bis 90 Mol-%,
z 0 bis 10 Mol-% bedeuten.

4. Verwendung der Zusammensetzung aus a) und b) nach Anspruch 1 in Inkjet-Tinten, **dadurch gekennzeichnet, dass** sie Träger b) in einer Menge von 1 bis 25 Gew.-% und Farbstoff a) in einer Menge von 0,1 bis 20 Gew.-% enthält.

5. Verwendung der Zusammensetzung aus a) und b) nach Anspruch 1 in Inkjet-Tinten, **dadurch gekennzeichnet, dass** die Tinte zusätzlich eine Polymerdispersion enthält.

6. Verwendung der Zusammensetzung aus a) und b) nach Anspruch 1 in Ink-jet Tinten nach Anspruch 5, **dadurch gekennzeichnet, dass** das Polymer der Polymerdispersion ein Polyacrylat, ein Polymethacrylat, ein Polystyrol, ein Polyacrylnitril, ein Polyvinylidenchlorid, ein Polycarbonat oder ein Polyurethan ist.

7. Verfahren zur Erzeugung von Inkjet-Bildern, wobei eine Tinte in einem feinen bildmäßig modulierten Strahl auf ein geeignetes Aufzeichnungsmaterial gespritzt wird, **dadurch gekennzeichnet, dass** die Tinte eine Zusammensetzung aus a) und b) nach einem der Ansprüche 1 bis 4 enthält.

8. Verfahren nach Anspruch 7, **dadurch gekennzeichnet, dass** die Tinte zusätzlich eine Polymerdispersion nach einem der Ansprüche 5 oder 6 enthält.

9. Verwendung einer Inkjet-Tinte zur Bedruckung von Verpackungsmaterialien, **dadurch gekennzeichnet, dass** die Tinte eine Zusammensetzung aus a) und b) nach einem der Ansprüche 1 bis 4 enthält.

10. Verwendung einer Inkjet-Tinte nach Anspruch 9, **dadurch gekennzeichnet, dass** die Tinte zusätzlich eine Polymerdispersion nach einem der Ansprüche 5 oder 6 enthält.

## Claims

1. Use of :
a) at least one water-soluble acid and anionic dye, and
b) at least one water-insoluble basic and cationic carrier for the acid dye
in ink jet inks, wherein the basic carrier consists of cross-linked polymer particles having a particle diameter of less than 1 µm and containing at least 2 mVal/g of covalently bonded quaternary ammonium or phosphonium groups.

2. Use of the composition of a) and b) according to claim 1 in ink jet inks, wherein the quaternary groups correspond to formula I : 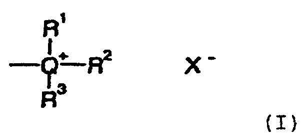 wherein :
Q denotes a nitrogen or phosphorus atom,
R¹, R² and R³ each denote a carbocyclic group or an alkyl group,
X⁻ denotes an anion, whereby R¹, R² and R³ may be identical or different or two of these groups may together complete a 5-membered or 6-membered heterocyclic ring.

3. Use of the composition of a) and b) according to claim 1 in ink jet inks, wherein the polymer of the cross-linked polymer particles corresponds to the formula
(-A-)ₓ (-M-)y (-B-)_{z} (II)
wherein :
A denotes the residue of a polymerized monomer having at least one polymerizable ethylenically unsaturated group and at least one quaternary group,
B denotes the residue of a polymerized monomer having at least two polymerizable ethylenically unsaturated groups,
M denotes the residue of a polymerized monomer having a polymerizable ethylenically unsaturated group,
x, y and z represent the numerical values of the proportions of the individual comonomers in the polymer, namely
x represents 10 to 99 mol percent,
y represents 0 to 90 mol percent, and
z represents 0 to 10 mol percent.

4. Use of the composition of a) and b) according to claim 1 in ink jet inks, wherein the composition contains carrier b) in an amount of from 1 to 25% by weight and dye a) in an amount of from 0.1 to 20% by weight.

5. Use of the composition of a) and b) according to claim 1 in ink jet inks, wherein the ink additionally contains a polymer dispersion.

6. Use of the composition of a) and b) according to claim 1 in ink jet inks according to claim 5, wherein the polymer of the polymer dispersion is a polyacrylate, polymethacrylate, polystyrene, polyacrylonitrile, polyvinylidene chloride, polycarbonate or polyurethane.

7. Process for the production of ink jet images, whereby an ink is sprayed onto a suitable recording material in a fine image-wise modulated stream, wherein the ink contains a composition of a) and b) according to any of claims 1 to 4.

8. Process according to claim 7, wherein the ink additionally contains a polymer dispersion according to any of claims 5 or 6.

9. Use of an ink jet ink for printing packaging materials, wherein the ink contains a composition of a) and b) according to any of claims 1 to 4.

10. Use of an ink jet ink according to claim 9, wherein the ink additionally contains a polymer dispersion according to any of claims 5 or 6.

## Revendications

1. Utilisation de
a) au moins un colorant hydrosoluble acide ou anionique, et
b) au moins un support basique ou cationique insoluble dans l'eau pour le colorant acide
dans des encres pour l'impression par jet d'encre, **caractérisée en ce que** le support basique est constitué de particules polymères réticulées présentant un diamètre de particules inférieur à 1 µm et une teneur en groupes ammonium ou phosphonium quaternaires liés par covalence d'au moins 2 méq/g.

2. Utilisation de la composition de a) et b) selon la revendication 1 dans des encres pour l'impression par jet d'encre, **caractérisée en ce que** les groupes quaternaires correspondent à la formule I 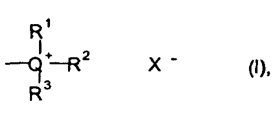 dans laquelle
Q représente un atome d'azote ou de phosphore ;
R¹, R² et R³ représentent chacun un radical carbocyclique ou un radical alkyle, et
X⁻ représente un anion, où R¹, R² et R³ peuvent présenter une signification identique ou différente l'un de l'autre, ou deux des radicaux mentionnés complètent conjointement un noyau hétérocyclique à 5 ou 6 chaînons.

3. Utilisation de la composition de a) et b) selon la revendication 1 dans des encres pour l'impression par jet d'encre, **caractérisée en ce que** le polymère des particules polymères réticulées correspond à la formule
(-A-)ₓ (-M-)_{y} (-B-)_{z} (II),
dans laquelle
A représente le radical d'un monomère polymérisé renfermant au moins un radical polymérisable éthyléniquement insaturé et au moins un groupe quaternaire ;
B représente le radical d'un monomère polymérisé renfermant au moins deux radicaux polymérisables éthyléniquement insaturés ;
M représente le radical d'un monomère polymérisé renfermant un radical polymérisable éthyléniquement insaturé ;
x, y, z représentent les valeurs numériques caractérisant la proportion des comonomères individuels dans le polymère et de telle sorte que
x soit de 10 à 99 % en moles,
y soit de 0 à 90 % en moles,
z soit de 0 à 10 % en moles.

4. Utilisation de la composition de a) et b) selon la revendication 1 dans des encres pour l'impression par jet d'encre, **caractérisée en ce qu'**elle comprend le support b) en une quantité de 1 à 25 % en poids et le colorant a) en une quantité de 0,1 à 20 % en poids.

5. Utilisation de la composition de a) et b) selon la revendication 1 dans des encres pour l'impression par jet d'encre, **caractérisée en ce que** l'encre comprend en outre une dispersion de polymère.

6. Utilisation de la composition de a) et b) selon la revendication 1 dans des encres pour l'impression par jet d'encre selon la revendication 5, **caractérisée en ce que** le polymère de la dispersion de polymère est un polyacrylate, un polyméthacrylate, un polystyrène, un polyacrylonitrile, un polychlorure de vinylidène, un polycarbonate ou un polyuréthane.

7. Procédé de production d'images par jet d'encre, dans lequel une encre est pulvérisée en un jet fin modulé suivant une image sur une matière d'enregistrement appropriée, **caractérisé en ce que** l'encre comprend une composition de a) et b) selon l'une quelconque des revendications 1 à 4.

8. Procédé selon la revendication 7, **caractérisé en ce que** l'encre comprend en outre une dispersion de polymère selon l'une quelconque des revendications 5 ou 6.

9. Utilisation d'une encre pour l'impression par jet d'encre, pour l'impression de matières d'emballage, **caractérisée en ce que** l'encre comprend une composition de a) et b) selon l'une quelconque des revendications 1 à 4.

10. Utilisation d'une encre pour l'impression par jet d'encre selon la revendication 9, **caractérisée en ce que** l'encre comprend en outre une dispersion de polymère selon l'une quelconque des revendications 5 ou 6.
